Europäisches Patentamt

European Patent Office

Office européen des brevets

(19)

(11) Veröffentlichungsnummer : **0 014 229**
**B2**

(12) # NEUE EUROPÄISCHE PATENTSCHRIFT

(45) Veröffentlichungstag der neuen Patentschrift :
**28.05.86**

(21) Anmeldenummer : **79104058.7**

(22) Anmeldetag : **19.10.79**

(51) Int. Cl.⁴ : **H 01 G   4/24**, H 01 G   1/01

(54) **Selbstheilender elektrischer Kondensator mit dünn ausgebildeter Belagschicht.**

(30) Priorität : **20.01.79 DE 2902195**

(43) Veröffentlichungstag der Anmeldung :
**20.08.80 Patentblatt 80/17**

(45) Bekanntmachung des Hinweises auf die Patenterteilung : **22.09.82 Patentblatt 82/26**

(45) Bekanntmachung des Hinweises auf die Entscheidung
über den Einspruch : **28.05.86 Patentblatt 86/22**

(84) Benannte Vertragsstaaten :
**CH DE FR GB IT NL SE**

(56) Entgegenhaltungen :
**DE-A- 2 359 432**
**DE-A- 2 703 636**
**DE-B- 1 087 277**
**DE-C-   975 973**
**FR-A- 2 299 706**
**Römpps Chemie-Lexikon, 7. Aufl., 1972, Seite 351**

(73) Patentinhaber : **ROBERT BOSCH GMBH**
**Postfach 50**
**D-7000 Stuttgart 1 (DE)**

(72) Erfinder : **Förster, Herbert, Dipl.-Phys.**
**Grundackerweg 28**
**D-7060 Schorndorf (DE)**

EP 0 014 229 B2

## Beschreibung

### Stand der Technik

Die Erfindung geht aus von einem selbstheilenden elektrischen Kondensator, insbesondere einem Wechselspannungskondensator, nach der Gattung des Hauptanspruches. Bei dünnen, auf die Oberflächen von Dielektrika als Kondensatorbeläge aufmetallisierten Metallschichten mit Flächenwiderständen je quadratischer Einheit, im folgenden als Quadratwiderstand bezeichnet, von etwa 3 Ohm ab setzt bei Überschreiten einer mittleren elektrischen Feldstärke im Dielektrikum ein kreisförmiger, mit der Belastungsdauer fortschreitender Abbau der Metallschicht ein, der aufgrund der Belagflächenverluste zu entsprechend fortschreitender Kapazitätsabnahme führt. Bei einer Polypropylen-Folie als Dielektrikum beginnt der Schichtabbau bei einer Frequenz von 50 Hz bei einer Effektivfeldstärke von ca 40 V/$\mu$m.

Um diesen unerwünschten Kapazitätsverlust zu vermeiden, werden derzeit kleinere Feldstärken angewendet, als es das Dielektrikum ansonsten zulassen würde. Beispielsweise werden Leuchtstofflampen-Kondensatoren mit metallisierter Polypropylen-Folie als Dielektrikum für Nennspannungen von 220 bis 250 V/50 Hz mit bekannten Aluminium-Belagschichten aus 8 $\mu$m dicker Polypropylen-Folie hergestellt, obgleich hierfür eine Foliendicke von 6 $\mu$m bei hinreichend dünnen Aluminiumschichten mit einem Quadratwiderstand größer 3,5 Ohm ausreichend wäre. Die sich ergebende Feldstärke wäre jedoch, zumindest bei der vorgeschriebenen elektrischen Prüfspannung von beispielsweise 1,25 × Nennspannung oder höher so hoch, daß der genannte Schichtabbau auftritt. Dieser Schichtabbau verursacht also höhere Kosten für den Kondensator und ein größeres Bauvolumen als an sich notwendig.

Bei einem selbstheilenden elektrischen Kondensator mit einer aufmetallisierten Belagschicht aus Aluminium ist auch bereits vorgeschlagen worden, zur Vermeidung des feldstärkeabhängigen Schichtabbaus einen geringen, gleichmäßig verteilten Cu-Anteil in die Belagschicht einzubauen.

Die Überlegung, welche diesem älteren Vorschlag zugrundelag, bestand im wesentlichen darin, daß durch den Metallzusatz die Leitfähigkeit der eigentlichen Belagschicht, insbesondere einer Aluminiumschicht, möglichst nicht verringert werden sollte. Aluminium als idealer elektrischer Leiter stellt ein besonders geeignetes Metall für den Belag eines selbstheilenden elektrischen Kondensators dar, weil einerseits dann der Belag sehr dünn ausgeführt werden kann zur Erzielung guter Selbstheileigenschaften, andererseits wegen der hohen elektrischen Leitfähigkeit aber dennoch nur geringe Stromwärmeverluste auftreten. Diese Eigenschaft wird beim Einbau von Kupfer nur geringfügig verändert.

Andere elektrisch gut leitfähige Metalle haben sich als Zusatz zur Belagschicht eines selbstheilenden Kondensators jedoch nicht bewährt um den feldstärkeabhängigen Schichtabbau zu verhindern.

Weitere Untersuchungen haben ergeben, daß erfindungsgemäß auch andere Metalle oder Kombinationen dieser Metalle mit gutem und sogar besserem Erfolg zur Verhinderung des Schichtabbaus in die Belagschicht eingebaut werden können, da der Schichtabbau dann erst bei höheren elektrischen Feldstärken einsetzt, als dies bei Belagschichten aus reinem Metall, insbesondere bei reinen Al-Schichten geschieht.

Es wird angestrebt, den erwähnten Schichtabbau bis zu den höchsten für das jeweilige Dielektrikum zulässigen Feldstärken, zumindest aber bei erhöhten mittleren Feldstärken zu verhindern oder auf ein praktisch unbeachtliches Maß zu reduzieren. Es sollen betriebssichere einlagige Kondensatoren, vorzugsweise aus metallisierter Polypropylen- oder Polycarbonat-Folie geschaffen werden, z. B. für effektive Wechsel-Nennspannungen bis 320 Volt mit Foliendicken bis 6 $\mu$m, für 400 bis 500 Volt mit einer Foliendicke von 8 $\mu$m und für Spannungen über 500 Volt mit Foliendicken von 9 $\mu$m oder darüber.

### Vorteile der Erfindung

Der erfindungsgemäße selbstheilende elektrische Kondensator mit den kennzeichnenden Merkmalen des Hauptanspruches besitzt den Vorteil, daß der erwähnte feldstärkeabhängige Schichtabbau praktisch nicht mehr auftritt, wobei entsprechend den sonstigen Herstellungsbedingungen, insbesondere den Bedampfungsbedingungen, ein geeigneter Zusatzstoff oder eine geeignete Kombination von Zusatzstoffen aus der beanspruchten Stoffgruppe der Belagschicht zugesetzt wird. Der mittlere Gewichtsanteil des zugesetzten Metalls, bzw. die Summe der entsprechenden Gewichtsanteile bei einer zugesetzten Metallkombination soll dabei vorzugsweise zwischen 2 und 5 %, zumindest aber im Bereich zwischen 0,5 und 5 % liegen. Kleinere Gewichtsanteile, wie sie beispielsweise als Verunreinigungen bei der Herstellung der Schichtmetalle auftreten können, haben praktisch keinen Einfluß im erfindungsgemäßen Sinne, bei Gewichtsanteilen über 10 % konnte keine Verbesserung mehr festgestellt werden hinsichtlich der Vermeidung des Schichtabbaues, jedoch verringern diese Zusätze die Leitfähigkeit der Schicht.

Als besonders vorteilhaft hat es sich erwiesen, wenn die weiteren Metalle überwiegend in Form intermetallischer Verbindungen mit dem Schichtmetall vorliegen. Die mittlere Flächenbelegung einer Al-Belagschicht sollte dabei zweckmäßigerweise mindestens 6 $\mu$g/cm$^2$ betragen ; bei einer Zn-Belagschicht liegt eine günstige mittlere Flächenbelegung bei mindestens 8 $\mu$g/cm². Die Belagschicht wird zweckmäßigerweise im Aufdampfverfahren hergestellt, weil hierbei mit relativ geringen Kosten Schichten in der gewünschten Art mit hoher Gleichmäßigkeit hergestellt werden können. Die Ausheileigenschaften des elektrischen Kondensators sind besonders günstig, wenn die Belagschicht eine niedrige mittlere Belegung besitzt.

Beschreibung der Erfindung

Die vorgeschlagene neue Belagschicht wird mit besonderem Vorteil angewendet bei Aluminium als Grundmaterial, stattdessen kann jedoch auch Zink als Grundmaterial dienen, dem die Metalle aus der beanspruchten Metallgruppe einzeln oder in Kombination zugefügt sind. Bei einem Ausführungsbeispiel wurde durch thermische Aufdampfung im Vakuum 6 $\mu$m dickes polypropylen-Folienband einseitig mit einer Aluminiumschicht bedampft, die einen Quadratwiderstand von 5 bis 7 Ohm besaß. Der Anteil des Zusatzmetalles soll mindestens jeweils 0,02 % für das Einzelelement, insgesamt mindestens 0,5 % und höchstens ca 5 % betragen, wenn bei ausreichend guter Leitfähigkeit der Schichtabbau bestmöglich verhindert werden soll. Dabei ist festgestellt worden, daß mit abnehmender Schichtdicke die angestrebte Wirkung der Beimengung abnimmt. Für praktische Anwendungen ist daher für die mittlere Al-Flächenbelegung als untere Grenze etwa 6 $\mu$g/cm² zu empfehlen. Die erfindungsgemäßen, einzeln oder gemeinsam beigefügten Zusatzmetalle zu Al-Schichten haben — soweit bisher bekannt — das gemeinsame Merkmal, daß ihre Atomradien um mindestens 1 % von dem das Al abweicht. Die Atomradien können beispielsweise bestimmt werden nach D'Ans-Lax, Taschenbuch für Chemiker und Physiker, Band 1, 3. Auflage, Springer-Verlag 1967.

Außer dem bereits erwähnten Vorteil der Anwendbarkeit der Bedampfungstechnik bieten die erwähnten Kombinations- und Auswahlmöglichkeiten unter den verschiedenen Zusatzmetallen den weiteren Vorteil, daß damit die Abhängigkeit von der jeweiligen Marktsituation für die einzelnen Metalle verringert werden kann. Dies trifft insbesondere für Kombinationsanteile verschiedener Elemente zu, weil für die Herstellung derartiger erfindungsgemäßer Schichten bereits handelsübliche, für andere Zwecke vorgesehene Werkstoffe ohne weiteres verfügbar sind, beispielsweise als Schweiß-Zusatzwerkstoffe.

Die Herstellung der erfindungsgemäßen Belagschichten kann mit bekannten physikalischen oder chemischen Metallisierungsverfahren erfolgen, sofern in der Belagschicht eine ausreichend homogene Verteilung der Beimengungen im erforderlichen Ausmaß und die Fernhaltung von schädlichen Zusätzen gewährleistet ist. Beispielsweise kann es zweckmäßig sein, die Schichten anstatt aus einem legierten Ausgangsmaterial aus zwei Ausgangsstoffen herzustellen, welche gegebenenfalls in zwei getrennten Tiegeln verdampft werden. Wenn unter gleichen Aufdampfbedingungen die Verdampfungsraten der verschiedenen Komponenten der Mehrstoffschicht unterschiedlich sind, muß u. U. ein Ausgangsmaterial anderer Legierungszusammensetzung verwendet werden oder beim Verdampfen aus getrennten Tiegeln entsprechende Regelungsvorrichtungen vorgesehen werden.

Durch die erfindungsgemäße Belagschicht ist es möglich geworden, höhere Nennfeldstärken bei den Kondensatoren vorzusehen und somit die Kondensatoren kleiner und preiswerter herzustellen. Das Aufbringen der Belagschicht erfordert insbesondere beim Aufdampfen keinen Mehraufwand und bringt erhebliche technische und wirtschaftliche Vorteile. Zwischenschichten oder Mehrschichtsysteme, wie sie bereits vorgeschlagen worden sind, sind nicht erforderlich. Der erfindungsgemäße Aufbau der Belagschicht hat weiterhin den Vorteil, daß elektrische Durchschläge im Dielektrikum, die durch betriebsmäßige Überspannungsspitzen ausgelöst werden können, einwandfrei ausbrennen. Ferner sind höhere Prüfspannungen ohne Gefahr schlechter Ausbrände möglich, wodurch man bei der Heraufsetzung der Prüfspannung mit einer kürzeren Prüfdauer auskommt. Schließlich ist es auch vorteilhaft, daß infolge der geringeren Schichtdicke kürzere Aufdampfzeiten und eine geringere thermische Belastung des Schichtträgers erreicht werden.

Die erfindungsgemäßen Belagschichten können sowohl bei imprägnierten wie bei nichtimprägnierten Kondensatoren vorteilhaft angewendet werden, denn auch bei imprägnierten Kondensatoren wird ab einer bestimmten mittleren Feldstärke ein Schichtabbau beobachtet. Beispielsweise bei Kondensatoren aus beidseitig metallisierten, feldfreien Papierbändern und Polycarbonat-Folien als Dielektrikum wird mit einer reinen Aluminiumschicht ein Schichtabbau bei einer mitteleren Feldstärke von ca 80 Volt/$\mu$m (50 Hz) beobachtet. Bei Kondensatoren mit einem Mischdielektrikum aus 8 $\mu$m dickem metallisierten Papierband und 6 $\mu$m Polypropylenfolie mit einem Quadratwiderstand der Aluminiumschicht von ca 15 Ohm ist ein Schichtabbau feststellbar bei der Spannung 475 Volt/50 Hz.

Die Selbstheilfähigkeit von Kondensatoren wird umso größer, je weniger Material in der Schicht enthalten ist, weil beim Ausbrand die im Lichtbogen freigesetzte Energie dann umso geringer ist. Bei einer erfindungsgemäßen Belagschicht mit Aluminium als Grundschicht konnte die Flächenbelegung wesentlich reduziert werden; bei einem Aluminium-Belag ist dabei selbstverständlich stets ein Teil des Aluminiums gebunden, insbesondere als Oxid oder Hydroxid.

**Patentansprüche**

1. Selbstheilender elektrischer Kondensator, insbesondere Wechselspannungskondensator, mit einem aus Kunststoffolie bestehenden Dielektrikum und einer aufmetallisierten Belagschicht

aus Al oder Zn als Grundmaterial, dadurch gekennzeichnet, daß das Grundmaterial der Belagschicht zur Vermeidung eines feldstärkeabhängigen Schichtabbaus als Zusatz in gleichmäßiger Verteilung wenigstens ein weiteres Metall aus der Gruppe Al, Ni, Mg, Ti, Hf, Be, Bi enthält, wobei die Summe der Gewichtsanteile der Zusatzmetalle an der Belagschicht 0,5 % bis 5 %, vorzugsweise 2 % bis 5 % beträgt.

2. Kondensator nach Anspruch 1, dadurch gekennzeichnet, daß die Zusatzmetalle überwiegend in Form intermetallischer Verbindungen mit dem Grundmaterial vorliegen.

3. Kondensator nach Anspruch 1 oder 2, dadurch gekennzeichnet, daß die mittlere Flächenbelegung mit einer Belagschicht mit Al als Grundmaterial mindestens 6 $\mu$g/cm$^2$ beträgt.

4. Kondensator nach Anspruch 1 oder 2, dadurch gekennzeichnet, daß die mittlere Flächenbelegung mit einer Belagschicht mit Zn als Grundmaterial mindestens 8 $\mu$g/cm$^2$ beträgt.

**Claims**

1. Self-healing electric capacitor, particularly an alternating voltage capacitor, comprising a dielectric consisting of plastic foil and a metallized cover layer of Al or Zn as base material, characterized in that, for preventing a field strength-dependent decomposition of the layer, the base material contains at least one further metal from the Al, Ni, Mg, Ti, Hf, Be, Bi group as an additive in uniform distribution, the sum of the proportions of the additional metals in the cover layer being 0.5 % to 5 %, preferably 2 % to 5 % by weight.

2. Capacitor according to Claim 1, characterized in that the additional metals are predominantly present in the form of intermetallic compounds with the base material.

3. Capacitor according to Claim 1 or 2, characterized in that the average covering per unit area with a cover layer having Al as the base material is at least 6 $\mu$g/cm$^2$.

4. Capacitor according to Claim 1 or 2, characterized in that the average covering per unit area with a cover layer having Zn as the base material is at least 8 $\mu$g/cm$^2$.

**Revendications**

1. Condensateur électrique auto-cicatrisable, notamment condensateur pour tension alternative, avec un diélectrique constitué d'un film de matière plastique et avec une couche d'armature métallisée, condensateur caractérisé en ce que le matériau de base de la couche d'armature, pour éviter une destruction de la couche en fonction de l'intensité du champ, contient en tant qu'adjonction, selon une répartition uniforme, au moins un autre métal du groupe aluminium, nickel, magnésium, titane, hafnium, béryllium, bismuth, la somme des proportions en poids des métaux d'adjonction dans la couche d'armature étant de 0,5 à 5 %, de préférence de 2 % à 5 %.

2. Condensateur selon la revendication 1, caractérisé en ce que les métaux d'adjonction sont présents de façon prépondérante sous la forme de combinaisons intermétalliques avec le matériau de base.

3. Condensateur selon la revendication 1 ou 2, caractérisé en ce que le dépôt superficiel moyen avec une couche d'armature comportant de l'aluminium comme matériau de base, est d'au moins 6 $\mu$g par cm$^2$.

4. Condensateur selon la revendication 1 ou 2, caractérisé en ce que le dépôt superficiel moyen avec une couche d'armature comportant du zinc comme matériau de base, est d'au moins 8 $\mu$g/cm$^2$.